# EUROPEAN PATENT APPLICATION

(11) **EP 2 389 021 A1**
(43) Date of publication of application: **23.11.2011**
(21) Application number: 10290277.2
(22) Date of filing: 21.05.2010
(51) Int. Cl.: H04W 4/22, H04L 12/58, H04W 4/14

(54) **Transmission of a warning by a base station**

(71) Applicant: Alcatel Lucent, 75007 Paris (FR)
(72) Inventor: Khatib, Mohammad, Swindon, SN25 1TZ, Wiltshire (GB); Brend, Graham R., Bath, BA1 7UE, Somerset (GB)
(74) Representative: Sarup, David Alexander

(57) **Abstract**

A method of transmitting a warning is provided comprising: detecting a warning message received at a base station for radio transmission to at least one user terminal connected by radio to the base station; in response to the detecting, the base station sending out at least one of an audible warning signal 15 and visual warning signal 17 so as to alert a person in the vicinity of the base station.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

As femtocell base stations are becoming more widely adopted, there is an increasing emphasis on small cells, which may be considered as femtocell base stations having a wider geographic coverage than typical femtocells but involving similar principles and techniques. It seems likely that the numbers of femtocell base stations, including small cells, will increase to a level of covering a significant proportion of the human population.

A femtocell base station is of a relatively low transmit power and hence each femtocell is of a small coverage area compared to a macrocell. For example, some typical femtocell base stations provide coverage of tens of metres, suitable for residential and enterprise environments. Accordingly, femtocell base stations may be intended for users belonging to a particular home or office.

Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

Femtocell base stations are sometimes referred to as femtos.

Femtos typically have auto-configuration and self-optimisation capabilities so as to enable simple plug-and-play deployment and to automatically configure themselves within an existing macrocellular network, for example to avoid causing unacceptable radio interference to macrocells.

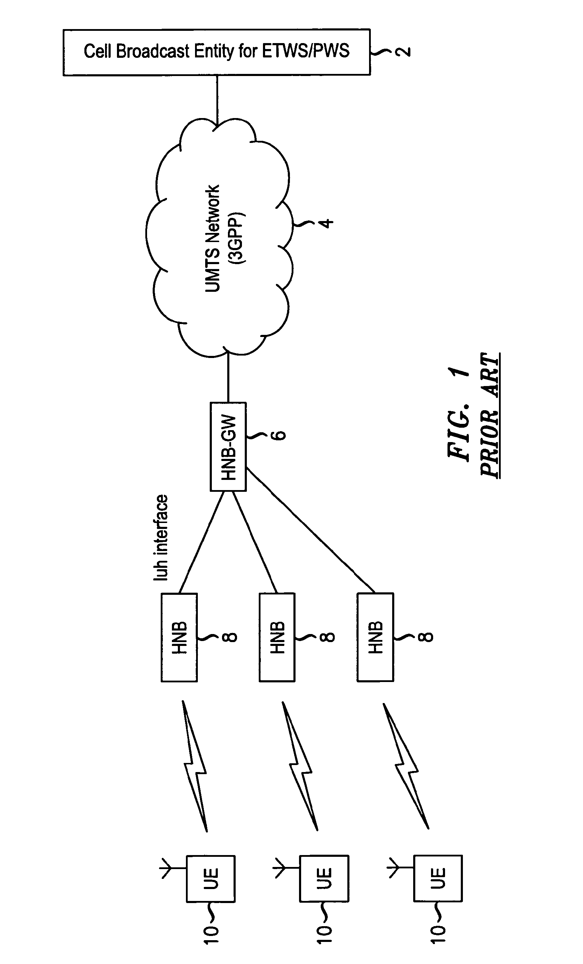

It is known from discussions at Third Generation Partnership Project (3GPP) RAN3 for femtos to include functions to support Earthquake and Tsunami Warning systems (ETWS) and Public Warning systems (PWS). These functions enable the broadcast by radio of an emergency warning to user terminals within the femtocells. As shown in Figure 1, in this known approach, the cell broadcast entity 2 for ETWS/PWS is connected via a Universal Mobile Telecommunications System (UMTS) network 4 to a femto-gateway 6 (also known as a HNB-GW, which denotes Home NodeB-GateWay, where a NodeB is a base station). The femto-gateway 6 is connected to each of multiple femtos 8 (a femto is also known as a HNB, which denotes Home NodeB, where a Node B is a base station). Each femto 8 may connect to one or more user terminals 10 (often referred to as user equipments, UEs, in UMTS terminology).

When the entity 2 sends an emergency message for broadcast, the message passes via the femto-gateway 6 to the femtos 8. The femtos transmit the message by radio for reception by those user terminals that are switched on.

### Summary

The reader is referred to the appended independent claims. Some preferred features are laid out in the dependent claims.

An example of the present invention is a method of transmitting a warning comprising: detecting a warning message received at a base station for radio transmission to at least one user terminal connected by radio to the base station; in response to the detecting, the base station sending out at least one of an audible warning signal and visual warning signal so as to alert a person in the vicinity of the base station.

Some preferred embodiments extend Earthquake and Tsunami Warning system (ETWS) and/or a Public Warning system (PWS) warnings by providing the base station with means to alert nearby people through an audible and/or visual warning of the emergency. This warning may be provided irrespective of whether user terminals are out of order, switched off, or absent from the coverage area of the base station.

Preferred embodiments enable warnings to be delivered to substantially more people than just by ETWS/PWS messages being sent by radio to user terminals. For example, by converting the standardised ETWS/PWS warning message to an audible and visual warning, people in coastal areas may be warned of the imminent arrival of a Tsunami regardless of whether whether they have a functioning user terminal. Preferred embodiments of the present invention have the advantage that, particularly in less economically developed countries having large populations, the warning may be provided to many people who either do not own a user terminal, such as a mobile phone, or if they do, are not connected, for example as their user terminal is out of battery charge due to electricity supply problems.

### Brief Description of the Drawings

Embodiments of the present invention will now be described by way of example and with reference to the drawings, in which:
Figure 1 is an illustration of a known approach to emergency message broadcast (PRIOR ART),
Figure 2 is a diagram illustrating a wireless communications network according to an embodiment of the present invention,
Figure 3 is a diagram illustrating emergency message broadcast in the network shown in Figure 2, and
Figure 4 is a diagram illustrating in more detail the femtocell base station shown in Figures 2 and 3, and
Figure 5 is a message sequence diagram further illustrating operation of the network according to Figures 2 to 4 in emergency message broadcast.

### Detailed Description

We now describe a network including femtocell base stations then look in greater detail at a femtocell base station and its operation in providing warning messages.

### Network

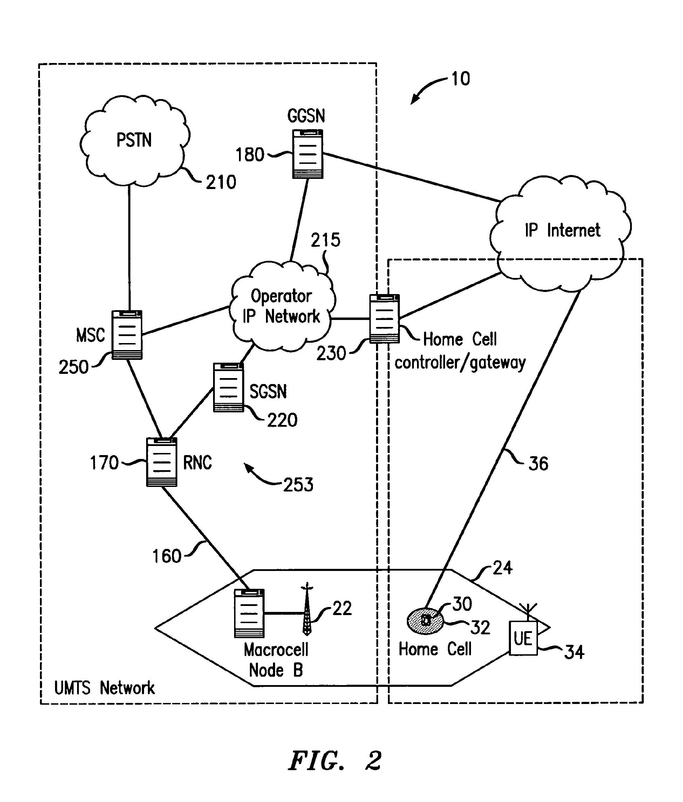

As shown in Figure 2, a network 10 for wireless communications, through which a user terminal 34 may roam, includes two types of base station, namely macrocell base stations and femtocell base stations (the latter being sometimes called "femtos"). One macrocell base station 22 is shown in Figure 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 2, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications network 10.

The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the radio network controller 170 communicates with serving general packet radio service support nodes (SGSNs) 220 and a gateway general packet radio support node (GGSN) 180.

The SGSN 220 and GGSN 180 are connected by an operator IP network 215 to a femtocell controller/gateway 230. The MSC 250 , SGSN 220, GGSN 180 and operator IP network constitute a so-called core network 253.

In order to be integrated with the macrocellular UMTS network 10, the femtos exchange signalling messages between themselves and various of the network elements in the network 10. This is done in such a way that to the UMTS network the femtos appear as one or more 3GPP standards-compliant nodes.

In Figure 2, only one femto is shown, however there are multiple femtos considered grouped into clusters (not shown). Each cluster behaves like a single radio network controller, RNC, when communicating with the SGSN 220, or MSC 250, of the core network 253. To achieve this, it is necessary for each cluster to be connected to the core network 253 via a respective femto-gateway 230 (also known as a Home cell controller/gateway or HNB-GW). It can be considered that the femto-gateway 230 acts to terminate the signalling interfaces to and from the core network 253, and the cluster of femtocells, and so the femto-gateway 230 may be considered a virtual RNC. The femto-gateway supports the femtos in various procedures.

### Providing Warning

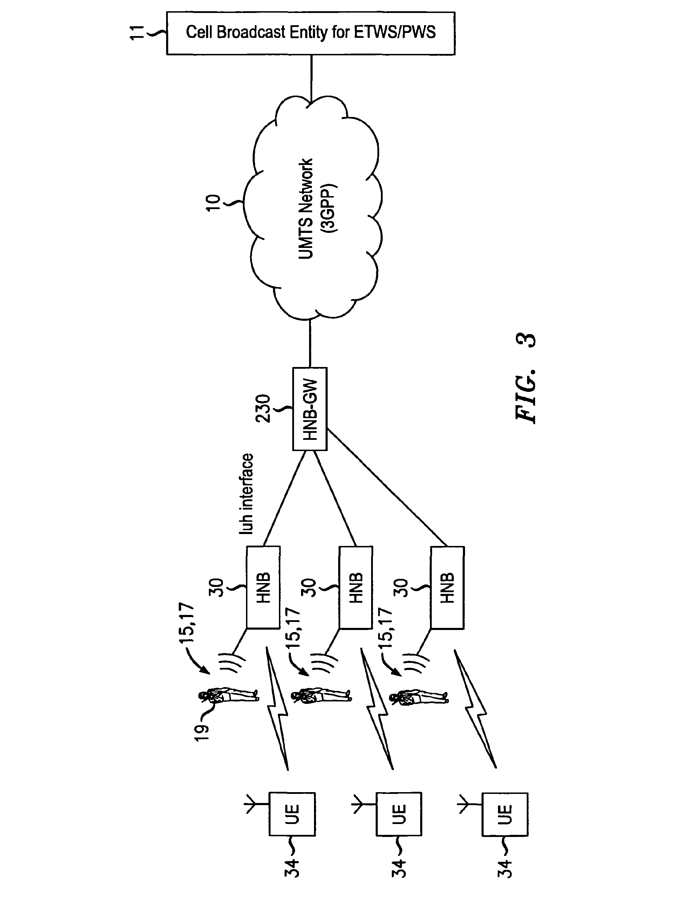

As shown in Figure 3, a cell broadcast entity 11 for Earthquake and Tsunami Warning system (ETWS) and/or a Public Warning system (PWS) is connected via the Universal Mobile Telecommunications System (UMTS) network to the femto-gateway 230 (also known as a HNB-GW, which denotes Home NodeB-GateWay, where a NodeB is a base station). The femto-gateway 230 is connected to each of multiple femtos (a femto is also known as a HNB, which denotes Home NodeB, where a Node B is a base station) 30. Each femto 30 may connect to one or more user terminals 34.

In use, when the entity 11 sends an emergency message for broadcast, the message passes via the femto-gateway 230 to the femtos 30. The femtos each transmit the message by radio for reception by those user terminals that are switched on.

Additionally, in each femto, the emergency message is detected triggering an audible warning signal 15 and visual warning signal 17 of the emergency to be sent out by the base station to be heard and seen by people 19 in the coverage area of the respective femto. In this example, the audible warning is a siren sound and recorded announcement to tell people about the impending disaster and what they should do, for example move inland to avoid a Tsunami. In this example, the visible warning is a flashing light, for example provided by a beacon.

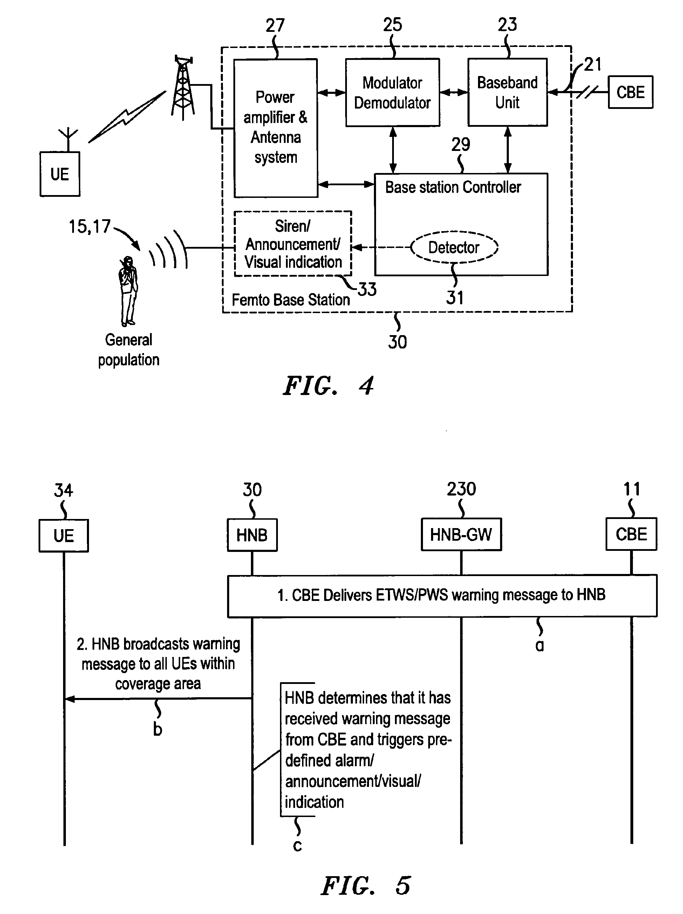

As shown in Figure 4, the femtocell base station 30 comprises an ETWS/PWS message input port 21 connected to a broadband unit 23 connected to a modulator-demodulator 25 which is connected to a power amplifier and antenna system 27. The baseband unit 23, modulator-demodulator 25 and power amplifier and antenna system 27 are each connected to a base station controller 29. The base station controller includes an emergency warning message detector 31. The detector 31 is connected to the audible and visual warning signal generators 33, namely siren and announcement hardware and a flashing warning light.

The detector 31 operates by decoding the ETWS/PWS broadcast message and in response triggering the audible and visual warning indicators 33.

As shown in Figure 5, the cell broadcast entity 11 sends (step a), using Service Area Broadcast Protocol (SABP), an ETWS/PWS warning message via the femto-gateway 230 to each femto 30. Each femto forwards (step b) the warning message by radio to all user terminals in its femtocell coverage area. Additionally, as described above the femto both detects that it has received a warning message from the cell broadcast entity 11 and in response triggers the pre-defined siren, announcement and visual warning (step c).

### General

The particular embodiment described above with reference to Figures 2 to 5, is a relatively-small femtocell based example. However, other embodiments are based on other types of base stations, such as base stations of so-called "small cells", or even larger cells such as macrocells.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of transmitting a warning comprising:
detecting a warning message received at a base station for radio transmission to at least one user terminal connected by radio to the base station;
in response to the detecting, the base station sending out at least one of an.audible warning signal and a visual warning signal so as to alert a person in the vicinity of the base station.

2. A method according to claim 1, in which the warning message is an Earthquake and Tsunami Warning System (ETWS) message or a Public Warning System (PWS) message.

3. A method according to claim 1 or claim 2, in which the base station is a femtocell base station.

4. A method according to any preceding claim, in which the base station is a small cell base station.

5. A method according to any preceding claim, in which the audible warning signal comprises at least one of a siren noise and a verbal information message.

6. A method according to any preceding claim, in which the visual warning signal comprises a flashing light.

7. A base station for cellular radio telecommunications comprising:
a receiver configured to receive a message for radio transmission to a user terminal in the radio coverage area of the base station,
a detector configured to detect that the message received is a warning message,
a transmitter configured to transmit the message by radio to the user terminal, and
a warning signal(s) generator configured to provide at least one of an audible warning signal and a visual warning signal so as to alert humans in the vicinity of the base station.

8. A base station according to claim 7, which is a femtocell base station.

9. A base station according to claim 7 or claim 8, which is a base station of a small cell.

10. A base station according to any of claims 7 to 9, in which the warning message is an Earthquake and Tsunami Warning System (ETWS) message or Public Warning System (PWS) message.

11. A base station according to any of claims 7 to 10, in which the warning signal(s) generator comprises at least one of a loudspeaker for a verbal information message and a siren.

12. A method according to any of claims 7 to 11, in which the warning signal(s) generator comprises a light that is configured to flash.
